# EUROPEAN PATENT APPLICATION

(11) **EP 4 019 347 A1**
(43) Date of publication of application: **29.06.2022**
(21) Application number: 20767611.5
(22) Date of filing: 14.08.2020
(51) Int. Cl.: B60T 8/17, B60T 8/32, B60T 8/1763, B60T 8/1761, B62L 3/02

(54) **CONTROL DEVICE AND CONTROL METHOD**

(30) Priority: 20.08.2019 JP 2019150506
(71) Applicant: Robert Bosch GmbH, 70442 Stuttgart (DE)
(72) Inventor: SUZUKI, Koji, Yokohama-shi, Kanagawa 224-8501 (JP); ONO, Shunsaku, Yokohama-shi, Kanagawa 224-8501 (JP)
(74) Representative: Isarpatent
(86) International application number: PCT/IB2020/057680
(87) International publication number: WO 2021/033107

(57) **Abstract**

The present invention obtains a controller and a control method capable of appropriately stabilizing behavior of a straddle-type vehicle.

In the controller and the control method according to the present invention, a control section capable of executing anti-lock brake control, in which a control flow is executed at least once, determines whether to execute a mode of shifting from hydraulic pressure keeping control to pressure reduction control or a mode of prohibiting shifting from the hydraulic pressure keeping control to pressure increase control on the basis of a rotational frequency of a target wheel during execution of the control flow. In the control flow, the pressure reduction control for reducing a brake hydraulic pressure of the target wheel, the hydraulic pressure keeping control for keeping the brake hydraulic pressure, and the pressure increase control for increasing the brake hydraulic pressure are sequentially executed in this order.

## Description

### Technical Field

The present disclosure relates to a controller and a control method capable of appropriately stabilizing behavior of a straddle-type vehicle.

### Background Art

Conventionally, as a controller that controls behavior of a straddle-type vehicle such as a motorcycle, a controller capable of executing anti-lock brake control is available. In the anti-lock brake control, for example, as disclosed in PTL 1, pressure reduction control for reducing a brake hydraulic pressure of a target wheel (that is, a wheel as a control target of the brake hydraulic pressure) is executed in the case where a slip rate of the target wheel becomes higher than an allowable slip rate. As a result, a reduced rotational frequency of the target wheel can be increased (that is, recovered). Thus, it is possible to suppress locking of the target wheel.

### Citation List

### Patent Literature

PTL 1: JP-A-2018-024324

### Summary of Invention

### Technical Problem

By the way, in a field related to the anti-lock brake control of the straddle-type vehicle, it is considered that further appropriate stabilization of the behavior of the straddle-type vehicle is desired. More specifically, in the anti-lock brake control, a control flow, in which the pressure reduction control for reducing the brake hydraulic pressure of the target wheel, hydraulic pressure keeping control for keeping the brake hydraulic pressure, and pressure increase control for increasing the brake hydraulic pressure are sequentially executed in this order, is executed at least once. As described above, the anti-lock brake control is executed on the basis of the slip rate of the target wheel.

Here, the slip rate is identified on the basis of an estimated vehicle speed that is a vehicle speed (that is, a speed of a vehicle body) estimated by using a detection value of a wheel rotational frequency sensor. However, when the vehicle speed is estimated by using the detection value of the wheel rotational frequency sensor, the estimated vehicle speed is possibly lower than an actual vehicle speed. Thus, due to a difference between the identified slip rate and the actual slip rate, a pressure reduction amount (that is, a reduced amount of the brake hydraulic pressure) in the pressure reduction control becomes insufficient. As a result, the brake hydraulic pressure after being reduced (that is, the brake hydraulic pressure that is kept in the hydraulic pressure keeping control) possibly becomes higher than an appropriate value. In such a case, the rotational frequency of the target wheel is recovered slowly, and the pressure increase control is executed before the rotational frequency of the target wheel is sufficiently recovered. As a result, the behavior of the straddle-type vehicle possibly becomes unstable.

The present invention has been made with the above-described problem as the background and therefore obtains a controller and a control method capable of appropriately stabilizing behavior of a straddle-type vehicle.

### Solution to Problem

A controller according to the present invention is a controller that controls behavior of a straddle-type vehicle, and includes a control section capable of executing anti-lock brake control in which a control flow is executed at least once, and in the control flow, pressure reduction control for reducing a brake hydraulic pressure of a target wheel, hydraulic pressure keeping control for keeping the brake hydraulic pressure, and pressure increase control for increasing the brake hydraulic pressure are sequentially executed in this order. During execution of the control flow, the control section determines whether to execute a mode of shifting from the hydraulic pressure keeping control to the pressure reduction control or a mode of prohibiting shifting from the hydraulic pressure keeping control to the pressure increase control on the basis of a rotational frequency of the target wheel.

A control method according to the present invention is a control method for controlling behavior of a straddle-type vehicle and includes: determining whether to execute a mode of shifting from hydraulic pressure keeping control to pressure reduction control or a mode of prohibiting shifting from the hydraulic pressure keeping control to pressure increase control on the basis of a rotational frequency of a target wheel during execution of a control flow by a control section of a controller capable of executing anti-lock brake control in which the control flow is executed at least once, and in the control flow, the pressure reduction control for reducing a brake hydraulic pressure of the target wheel, the hydraulic pressure keeping control for keeping the brake hydraulic pressure, and the pressure increase control for increasing the brake hydraulic pressure are sequentially executed in this order.

### Advantageous Effects of Invention

In the controller and the control method according to the present invention, the control section capable of executing the anti-lock brake control, in which the control flow is executed at least once, determines whether to execute the mode of shifting from the hydraulic pressure keeping control to the pressure reduction control or the mode of prohibiting shifting from the hydraulic pressure keeping control to the pressure increase control on the basis of the rotational frequency of the target wheel during the execution of the control flow. In the control flow, the pressure reduction control for reducing the brake hydraulic pressure of the target wheel, the hydraulic pressure keeping control for keeping the brake hydraulic pressure, and the pressure increase control for increasing the brake hydraulic pressure are sequentially executed in this order. Accordingly, in the case where the rotational frequency of the target wheel is recovered slowly due to an insufficient pressure reduction amount in the pressure reduction control, it is possible to suppress the pressure increase control from being executed before the rotational frequency of the target wheel is sufficiently recovered. Therefore, it is possible to appropriately stabilize the behavior of the straddle-type vehicle.

### Brief Description of Drawings

Fig. 1 is a schematic view of an outline configuration of a motorcycle to which a controller according to an embodiment of the present invention is mounted.
Fig. 2 is a schematic view of an outline configuration of a brake system according to the embodiment of the present invention.
Fig. 3 is a block diagram of an exemplary functional configuration of the controller according to the embodiment of the present invention.
Fig. 4 is a flowchart of an example of a processing procedure that is related to anti-lock brake control executed by the controller according to the embodiment of the present invention.
Fig. 5 is a graph illustrating an example of a transition of each state amount during travel on a high µ road.
Fig. 6 is a graph illustrating an example of the transition of each of the state amounts during the travel on a low µ road.
Fig. 7 is a schematic view of an outline configuration of a motorcycle according to another example to which the controller according to the embodiment of the present invention is mounted.

### Description of Embodiments

A description will hereinafter be made on a controller according to the present invention with reference to the drawings. Hereinafter, a description will be made on the controller used for a two-wheeled motorcycle. However, the controller according to the present invention may be used for a straddle-type vehicle other than the two-wheeled motorcycle (for example, a three-wheeled motorcycle, an all-terrain vehicle, a bicycle, or the like). The straddle-type vehicle means a vehicle that a rider straddles, and includes a scooter and the like.

A configuration, operation, and the like, which will be described below, merely constitute one example. The controller and the control method according to the present invention are not limited to a case with such a configuration, such operation, and the like.

The same or similar description will appropriately be simplified or will not be made below. In the drawings, the same or similar members or portions will not be denoted by a reference sign or will be denoted by the same reference sign. In addition, a detailed structure will appropriately be illustrated in a simplified manner or will not be illustrated.

### <Configuration of Motorcycle>

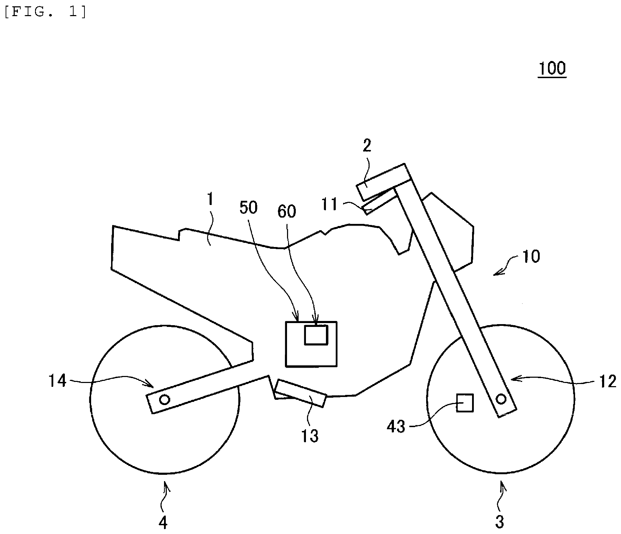

A description will be made on a configuration of a motorcycle 100 to which a controller 60 according to an embodiment of the present invention is mounted with reference to Fig. 1 to Fig. 3.

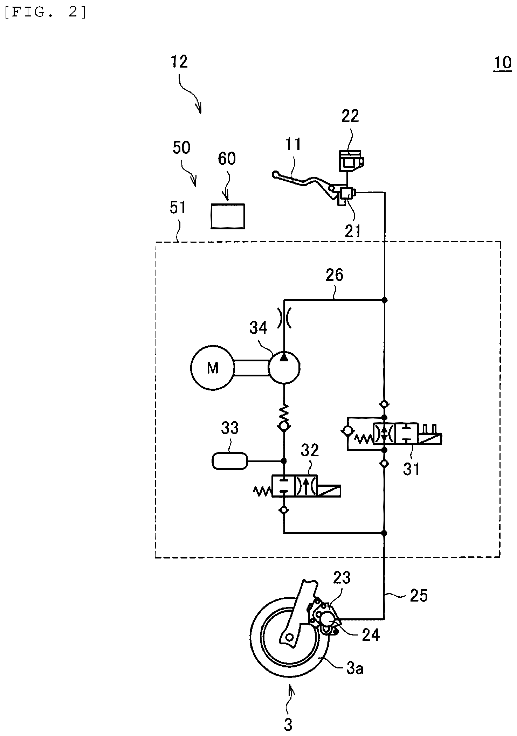

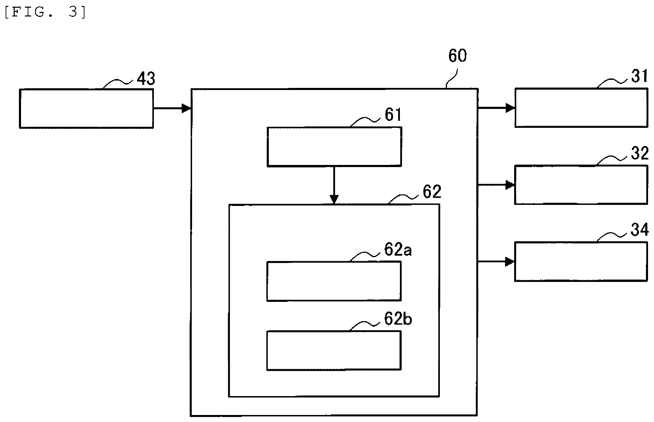

Fig. 1 is a schematic view of an outline configuration of the motorcycle 100 to which the controller 60 is mounted. Fig. 2 is a schematic view of an outline configuration of a brake system 10. Fig. 2 only illustrates a front-wheel brake mechanism 12 and does not illustrate a rear-wheel brake mechanism 14. Fig. 3 is a block diagram of an exemplary functional configuration of the controller 60.

As illustrated in Fig. 1, the motorcycle 100 includes: a trunk 1; a handlebar 2 that is held by the trunk 1 in a freely turnable manner; a front wheel 3 that is held by the trunk 1 in the freely turnable manner with the handlebar 2; a rear wheel 4 that is held by the trunk 1 in a freely rotatable manner; the brake system 10; and a front-wheel rotational frequency sensor 43. In this embodiment, the controller (ECU) 60 is provided to a hydraulic pressure control unit 50 in the brake system 10, which will be described later.

The brake system 10 of the motorcycle 100 can execute anti-lock brake control only for the front wheel 3 as a target. More specifically, as illustrated in Fig. 1 and Fig. 2, the brake system 10 includes: a first brake operation section 11; the front-wheel brake mechanism 12 that brakes the front wheel 3 in an interlocking manner with at least the first brake operation section 11; a second brake operation section 13; and the rear-wheel brake mechanism 14 that brakes the rear wheel 4 in an interlocking manner with the second brake operation section 13. The brake system 10 also includes the hydraulic pressure control unit 50, and the front-wheel brake mechanism 12 is partially included in the hydraulic pressure control unit 50. The hydraulic pressure control unit 50 is a unit that has a function of controlling a braking force to be generated on the front wheel 3 by the front-wheel brake mechanism 12.

The first brake operation section 11 is provided to the handlebar 2 and is operated by the rider's hand. The first brake operation section 11 is a brake lever, for example. The second brake operation section 13 is provided to a lower portion of the trunk 1 and is operated by the rider's foot. The second brake operation section 13 is a brake pedal, for example.

The front-wheel brake mechanism 12 includes: a master cylinder 21 that includes a piston (not illustrated); a reservoir 22 that is attached to the master cylinder 21; a brake caliper 23 that is held by the trunk 1 and has a brake pad (not illustrated) ; a wheel cylinder 24 that is provided to the brake caliper 23; a primary channel 25 through which a brake fluid in the master cylinder 21 flows into the wheel cylinder 24; and a secondary channel 26 through which the brake fluid in the wheel cylinder 24 is released.

An inlet valve (EV) 31 is provided to the primary channel 25. The secondary channel 26 bypasses a portion of the primary channel 25 between the wheel cylinder 24 side and the master cylinder 21 side from the inlet valve 31. The secondary channel 26 is sequentially provided with an outlet valve (AV) 32, an accumulator 33, and a pump 34 from an upstream side.

The inlet valve 31 is an electromagnetic valve that is opened in an unenergized state and closed in an energized state, for example. The outlet valve 32 is an electromagnetic valve that is closed in an unenergized state and opened in an energized state, for example.

The hydraulic pressure control unit 50 includes: components such as the inlet valve 31, the outlet valve 32, the accumulator 33, and the pump 34 used to control a brake hydraulic pressure; a base body 51 in which those components are provided and channels constituting the primary channel 25 and the secondary channel 26 are formed; and the controller 60.

The base body 51 may be formed of one member or may be formed of multiple members. In the case where the base body 51 is formed of the multiple members, the components may separately be provided to the different members.

The controller 60 controls operation of each of the components in the hydraulic pressure control unit 50. As a result, the braking force to be generated on the front wheel 3 by the front-wheel brake mechanism 12 is controlled.

For example, in a normal time (that is, when the anti-lock brake control is not executed), the controller 60 opens the inlet valve 31 and closes the outlet valve 32. When the first brake operation section 11 is operated in such a state, in the front-wheel brake mechanism 12, the piston (not illustrated) in the master cylinder 21 is pressed to increase the brake hydraulic pressure of the wheel cylinder 24 (that is, the brake hydraulic pressure of the front wheel 3), the brake pad (not illustrated) of the brake caliper 23 is then pressed against a rotor 3a of the front wheel 3, and the braking force is thereby generated on the front wheel 3.

Similar to the front-wheel brake mechanism 12, the rear-wheel brake mechanism 14 includes: a master cylinder that includes a piston; a reservoir that is attached to the master cylinder; a brake caliper that is held by the trunk 1 and has a brake pad; and a wheel cylinder that is provided to the brake caliper. Here, different from the front-wheel brake mechanism 12, the rear-wheel brake mechanism 14 is not provided with a hydraulic pressure control unit including various components, and the master cylinder and the wheel cylinder are directly coupled to each other by a channel through which the brake fluid flows.

Thus, in the rear-wheel brake mechanism 14, a braking force that corresponds to an operation amount of the second brake operation section 13 by the rider is generated on the rear wheel 4. More specifically, when the second brake operation section 13 is operated, in the rear-wheel brake mechanism 14, the piston (not illustrated) in the master cylinder is pressed to increase the brake hydraulic pressure of the wheel cylinder, the brake pad (not illustrated) of the brake caliper is then pressed against a rotor of the rear wheel 4, and the braking force is thereby generated on the rear wheel 4.

The front-wheel rotational frequency sensor 43 is a rotational frequency sensor for the front wheel 3 that detects a rotational frequency of the front wheel 3 (for example, a rotational frequency of the front wheel 3 per unit time [rpm], a travel distance per unit time [km/h], or the like), and outputs a detection result. The front-wheel rotational frequency sensor 43 may detect another physical quantity that can substantially be converted to the rotational frequency of the front wheel 3. The front-wheel rotational frequency sensor 43 is provided to the front wheel 3.

The controller 60 controls behavior of the motorcycle 100.

For example, the controller 60 is partially or entirely constructed of a microcomputer, a microprocessor unit, or the like. Alternatively, the controller 60 may partially or entirely be constructed of a member in which firmware or the like can be updated, or may partially or entirely be a program module or the like that is executed by a command from a CPU or the like, for example. The controller 60 may be provided as one unit or may be divided into multiple units, for example.

As illustrated in Fig. 3, the controller 60 includes an acquisition section 61 and a control section 62, for example.

The acquisition section 61 acquires information that is output from each of the devices mounted to the motorcycle 100, and outputs the acquired information to the control section 62. For example, the acquisition section 61 acquires information that is output from the front-wheel rotational frequency sensor 43.

In order to control the behavior of the motorcycle 100, the control section 62 controls the braking force generated on the motorcycle 100. In particular, the control section 62 can execute the anti-lock brake control for the front wheel 3 as the target.

In the case where the controller 60 is mounted to the motorcycle 100, the control section 62 can execute the anti-lock brake control only for the front wheel 3 as the target. However, as will be described later, in the case where the controller 60 is mounted to a motorcycle that has another configuration, the control section 62 may be able to execute the anti-lock brake control for each of the front wheel 3 and the rear wheel 4 as the targets.

The control section 62 includes a determination section 62a and a brake control section 62b, each of which functions in cooperation with the program, for example.

The determination section 62a makes various determinations and outputs determination results to the brake control section 62b. The determination results by the determination section 62a are used for control that is executed by the brake control section 62b. In particular, during execution of a control flow (that is, a control flow in which pressure reduction control, hydraulic pressure keeping control, and pressure increase control are sequentially executed in this order), which will be described later, in the anti-lock brake control, the determination section 62a determines whether to execute a mode of shifting from the hydraulic pressure keeping control to the pressure reduction control or a mode of prohibiting (more specifically, temporarily prohibiting) shifting from the hydraulic pressure keeping control to the pressure increase control.

The brake control section 62b controls the braking force to be generated on the front wheel 3 by controlling operation of each of the components of the hydraulic pressure control unit 50 in the brake system 10.

In the normal time, as described above, the brake control section 62b controls the operation of each of the components of the hydraulic pressure control unit 50 such that the braking force corresponding to an operation amount of the first brake operation section 11 by the rider is generated on the front wheel 3.

Here, in the case where the front wheel 3 is locked or possibly locked, the brake control section 62b executes the anti-lock brake control. The anti-lock brake control is control for adjusting the braking force to be generated on the front wheel 3 to the braking force with which locking of the front wheel 3 can be avoided. More specifically, in the anti-lock brake control, the control flow, in which the pressure reduction control for reducing the brake hydraulic pressure of the front wheel 3, the hydraulic pressure keeping control for keeping the brake hydraulic pressure of the front wheel 3, and the pressure increase control for increasing the brake hydraulic pressure of the front wheel 3 are sequentially executed in this order, is executed at least once.

In addition, during the execution of the control flow, when determining to execute the mode of shifting from the hydraulic pressure keeping control to the pressure reduction control or the mode of prohibiting shifting from the hydraulic pressure keeping control to the pressure increase control, the brake control section 62b executes the above mode (that is, the mode of shifting from the hydraulic pressure keeping control to the pressure reduction control or the mode of prohibiting shifting from the hydraulic pressure keeping control to the pressure increase control) and thereby temporarily prohibits the pressure increase control. For example, when determining to execute the mode of shifting from the hydraulic pressure keeping control to the pressure reduction control, the brake control section 62b prohibits the pressure increase control and then, executes additional pressure reduction control for further reducing the brake hydraulic pressure of the front wheel 3.

By the way, the anti-lock brake control is executed on the basis of a slip rate of the front wheel 3 that is identified by using an estimated vehicle speed. Here, since the vehicle speed is estimated by using a detection value of the front-wheel rotational frequency sensor 43, the estimated vehicle speed is possibly lower than the actual vehicle speed. Thus, due to a difference between the identified slip rate and the actual slip rate, a pressure reduction amount (that is, a reduced amount of the brake hydraulic pressure of the front wheel 3) in the pressure reduction control becomes insufficient. As a result, the brake hydraulic pressure after being reduced possibly becomes higher than an appropriate value. For example, in the case where the slip rate is estimated to be lower than the actual value, timing to initiate the pressure reduction control is delayed. As a result, the brake hydraulic pressure at a time point of initiating the pressure reduction control remains to be high, and thus the brake hydraulic pressure after being reduced possibly becomes higher than the appropriate value. Just as described, in the case where the pressure reduction amount in the pressure reduction control is insufficient, the rotational frequency of the front wheel 3 is recovered slowly, and the pressure increase control is executed before the rotational frequency of the front wheel 3 is sufficiently recovered. As a result, the behavior of the motorcycle 100 possibly becomes unstable.

As described above, in the controller 60, during the execution of the control flow in the anti-lock brake control, the control section 62 determines whether to execute the mode of shifting from the hydraulic pressure keeping control to the pressure reduction control or the mode of prohibiting shifting from the hydraulic pressure keeping control to the pressure increase control. Here, the control section 62 determines whether to execute the above mode (that is, the mode of shifting from the hydraulic pressure keeping control to the pressure reduction control or the mode of prohibiting shifting from the hydraulic pressure keeping control to the pressure increase control) on the basis of the rotational frequency of the front wheel 3. In this way, the behavior of the motorcycle 100 is appropriately stabilized. A detailed description will be made below on processing that is related to such anti-lock brake control executed by the controller 60.

### <Operation of Controller>

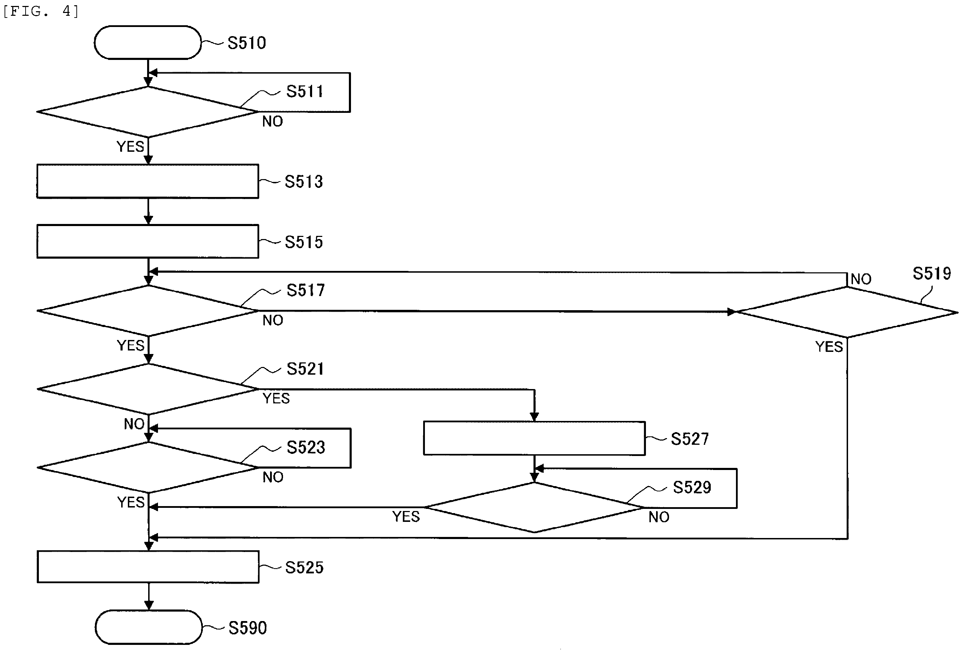

A description will be made on operation of the controller 60 according to the embodiment of the present invention with reference to Fig. 4 to Fig. 6.

Fig. 4 is a flowchart of an example of a processing procedure that is related to the anti-lock brake control executed by the controller 60. The control flow illustrated in Fig. 4 corresponds to the control flow in which the pressure reduction control, the hydraulic pressure keeping control, and the pressure increase control are sequentially executed in this order, and, more specifically, is repeatedly executed by the control section 62 of the controller 60. In addition, step S510 and step S590 in Fig. 4 respectively correspond to initiation and termination of the control flow illustrated in Fig. 4.

When the control flow illustrated in Fig. 4 is initiated, in step S511, the determination section 62a determines whether the front wheel 3, which is the target wheel for the anti-lock brake control, is locked or possibly locked.

More specifically, the determination section 62a estimates the vehicle speed of the motorcycle 100 on the basis of the rotational frequency of the front wheel 3 that is detected by the front-wheel rotational frequency sensor 43. Then, the determination section 62a determines whether the front wheel 3 is locked or possibly locked on the basis of the slip rate of the front wheel 3 that is identified by using the estimated vehicle speed as the vehicle speed estimated just as described. For example, the determination section 62a calculates the slip rate of the front wheel 3 by dividing a difference between the estimated vehicle speed and the rotational frequency of the front wheel 3 by the estimated vehicle speed. Then, in the case where the slip rate is higher than an allowable slip rate, the determination section 62a determines that the front wheel 3 is locked or possibly locked. The allowable slip rate is a set value with which it is possible to appropriately determine whether the front wheel 3 is locked or possibly locked, and can appropriately be set according to a specification of the vehicle.

In step S511, if it is determined that the front wheel 3 is not locked or possibly locked (step S511/NO), the determination processing in step S511 is repeated. On the other hand, if it is determined that the front wheel 3 is locked or possibly locked (step S511/YES), as will be described below, the pressure reduction control, the hydraulic pressure keeping control, and the pressure increase control are sequentially executed in this order. In this case, more specifically, the processing first proceeds to step S513, and the pressure reduction control is executed.

More specifically, in the pressure reduction control, the brake control section 62b brings the motorcycle 100 into a state where the inlet valve 31 is closed and the outlet valve 32 is opened, and thereby reduces the brake hydraulic pressure in the wheel cylinder 24 (that is, the brake hydraulic pressure of the front wheel 3) so as to reduce the braking force to be generated on the front wheel 3. At the time, the brake fluid, an amount of which corresponds to the reduced amount of the brake hydraulic pressure in the wheel cylinder 24, flows into the accumulator 33. The brake fluid that has flowed into the accumulator 33 is returned to a portion on the master cylinder 21 side of the primary channel 25 via the secondary channel 26 when the pump 34 is driven.

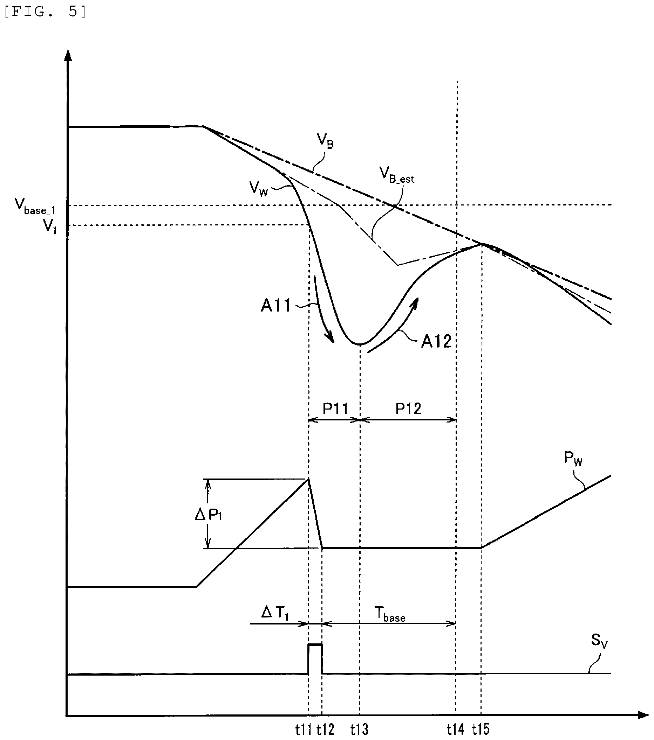

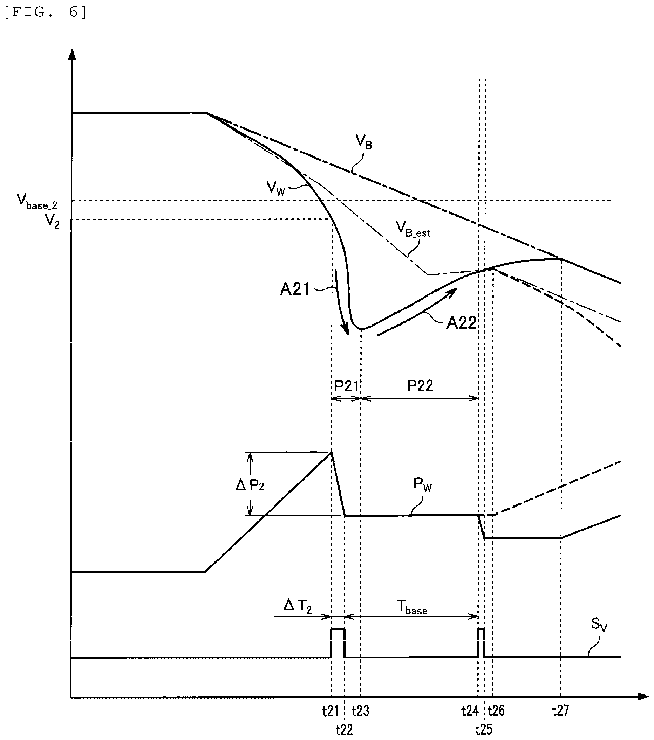

Here, at the time point of initiating the pressure reduction control, a target pressure reduction amount that is a target value of the pressure reduction amount (corresponding to each of differences ΔP₁, ΔP₂ in a brake hydraulic pressure P_{W} in Figs. 5 and 6, which will be described later) is determined. The target pressure reduction amount may be determined by a well-known technique by using various parameters, or the like. Then, an outlet valve open period (corresponding to each of outlet valve open periods ΔT₁, ΔT₂ in Figs. 5 and 6, which will be described later) as a period in which the outlet valve 32 is opened in the pressure reduction control is determined on the basis of the target pressure reduction amount that is determined at the time point of initiating the pressure reduction control. In the pressure reduction control, the brake control section 62b maintains the state where the inlet valve 31 is closed and the outlet valve 32 is opened only for the outlet valve open period, which is determined just as described.

Next, in step S515, the brake control section 62b executes the hydraulic pressure keeping control.

More specifically, in the hydraulic pressure keeping control, the brake control section 62b shifts the state where the inlet valve 31 is closed and the outlet valve 32 is opened to a state where both of the inlet valve 31 and the outlet valve 32 are closed, and thereby keeps the brake hydraulic pressure in the wheel cylinder 24 so as to keep the braking force to be generated on the front wheel 3.

Next, in step S517, the determination section 62a determines whether a reference period (corresponding to a reference period T_{base} in Figs. 5 and 6, which will be described later) has elapsed. If it is determined that the reference period has elapsed (step S517/YES), the processing proceeds to step S521. On the other hand, if it is determined that the reference period has not elapsed (step S517/NO), the processing proceeds to step S519.

As will be described later, if it is determined in step S517 that the reference period has elapsed, it is determined whether to execute the mode of shifting from the hydraulic pressure keeping control to the pressure reduction control. In addition, in such a determination, in the case where it is assumed that the rotational frequency of the front wheel 3 is recovered slowly due to the insufficient pressure reduction amount in the pressure reduction control, it is determined to execute the mode of shifting from the hydraulic pressure keeping control to the pressure reduction control. Thus, the reference period is appropriately set to such a period that timing to determine whether to execute the mode of shifting from the hydraulic pressure keeping control to the pressure reduction control becomes timing at which it is possible to appropriately determine whether the rotational frequency of the front wheel 3 is recovered slowly due to the insufficient pressure reduction amount in the pressure reduction control.

If it is determined NO in step S517, in step S519, the determination section 62a determines whether an execution condition of the pressure increase control is satisfied. If it is determined that the execution condition of the pressure increase control is satisfied (step S519/YES), the processing proceeds to step S525, and the pressure increase control is executed as will be described later. On the other hand, if it is determined that the execution condition of the pressure increase control is not satisfied (step S519/NO), the processing returns to the determination processing in step S517.

For example, the execution condition of the pressure increase control is a condition that the difference between the rotational frequency of the front wheel 3 and the estimated vehicle speed becomes smaller than a reference difference. The reference difference is set to a value with which it is possible to appropriately determine whether the rotational frequency of the front wheel 3 is sufficiently recovered close to the estimated vehicle speed.

If it is determined YES in step S517, in step S521, the determination section 62a determines whether to execute the mode of shifting from the hydraulic pressure keeping control to the pressure reduction control. If it is determined to execute the mode of shifting from the hydraulic pressure keeping control to the pressure reduction control (step S521/YES), the processing proceeds to step S527. On the other hand, if it is not determined to execute the mode of shifting from the hydraulic pressure keeping control to the pressure reduction control (step S521/NO), the processing proceeds to step S523.

More specifically, in the determination processing in above-described step S521, in the case where it is assumed that the rotational frequency of the front wheel 3 is recovered slowly due to the insufficient pressure reduction amount in the pressure reduction control, the determination section 62a determines to execute the mode of shifting from the hydraulic pressure keeping control to the pressure reduction control.

As described above, the determination section 62a determines whether to execute the mode of shifting from the hydraulic pressure keeping control to the pressure reduction control on the basis of the rotational frequency of the front wheel 3 that is the target wheel for the anti-lock brake control. Here, as determination criteria for whether to execute the mode of shifting from the hydraulic pressure keeping control to the pressure reduction control, the determination section 62a can use various conditions. A description will hereinafter be made on a first condition, a second condition, and a third condition as examples of conditions that can be included in the determination criteria for whether to execute the mode of shifting from the hydraulic pressure keeping control to the pressure reduction control.

The first condition is a condition that a magnitude of a change in the rotational frequency of the front wheel 3 at the time when the rotational frequency is increased during the execution of the control flow illustrated in Fig. 4 is equal to or smaller than a reference value or is smaller than the reference value. By the way, the rotational frequency of the front wheel 3 is reduced at the time point of initiating the pressure reduction control. However, during the execution of the control flow illustrated in Fig. 4, the brake hydraulic pressure of the front wheel 3 is reduced by the pressure reduction control. As a result, the state where the rotational frequency is reduced is shifted to a state where the rotational frequency is increased. Since the rotational frequency of the front wheel 3 is recovered slowly due to the insufficient pressure reduction amount in the pressure reduction control, the magnitude of the change in the rotational frequency of the front wheel 3 at the time when the rotational frequency is increased just as described tends to be small. Accordingly, in the case where the first condition is satisfied, it is determined to execute the mode of shifting from the hydraulic pressure keeping control to the pressure reduction control. As a result, it is possible to appropriately prohibit the pressure increase control when the rotational frequency of the front wheel 3 is recovered slowly due to the insufficient pressure reduction amount in the pressure reduction control.

For example, as the above magnitude of the change, a value that is acquired by dividing a difference in the rotational frequency of the front wheel 3 at two mutually different time during the increase of the rotational frequency by a time interval therebetween may be used. Alternatively, for example, as the above magnitude of the change, an average value or a maximum value of a time rate of the change in the rotational frequency of the front wheel 3 at each time during the increase of the rotational frequency may be used.

The second condition is a condition that, after the rotational frequency of the front wheel 3 is reduced during the execution of the control flow illustrated in Fig. 4, the rotational frequency of the front wheel 3 is equal to or lower than a reference value that corresponds to the rotational frequency at the time point of initiating the pressure reduction control, or is lower than the reference value. As described above, the brake hydraulic pressure of the front wheel 3 is reduced by the pressure reduction control during the execution of the control flow illustrated in Fig. 4. As a result, the state where the rotational frequency is reduced is shifted to the state where the rotational frequency is increased. Since the rotational frequency of the front wheel 3 is recovered slowly due to the insufficient pressure reduction amount in the pressure reduction control, an upper limit value that can be reached after the rotational frequency of the front wheel 3 is reduced and thereafter increased tends to be small. Accordingly, in the case where the second condition is satisfied, it is determined to execute the mode of shifting from the hydraulic pressure keeping control to the pressure reduction control. As a result, it is possible to appropriately prohibit the pressure increase control when the rotational frequency of the front wheel 3 is recovered slowly due to the insufficient pressure reduction amount in the pressure reduction control.

The above reference value is set to a value with which it is possible to appropriately determine whether the rotational frequency of the front wheel 3 has reached close to the rotational frequency at the time point of initiating the pressure reduction control after the rotational frequency of the front wheel 3 is reduced. For example, as the above reference value, a higher value than the rotational frequency of the front wheel 3 at the time point of initiating the pressure reduction control may be used, a lower value than the rotational frequency of the front wheel 3 at the time point of initiating the pressure reduction control may be used, or a value that matches the rotational frequency of the front wheel 3 at the time point of initiating the pressure reduction control may be used.

The third condition is a condition that the magnitude of the change in the rotational frequency of the front wheel 3 at the time when the rotational frequency is reduced during the execution of the control flow illustrated in Fig. 4 is equal to or larger than a reference value or is larger than the reference value. As described above, the rotational frequency of the front wheel 3 is reduced at the time point of initiating the pressure reduction control. Thus, during the execution of the control flow illustrated in Fig. 4, the rotational frequency of the front wheel 3 is reduced before the rotational frequency starts being increased. Just as described, the magnitude of the change in the rotational frequency of the front wheel 3 at the time when the rotational frequency is reduced represents a relationship between the brake hydraulic pressure of the front wheel 3 and a friction coefficient between the front wheel 3 and a road surface (that is, a road surface that the front wheel 3 contacts) at the time point of initiating the pressure reduction control. More specifically, in the case where the brake hydraulic pressure of the front wheel 3 is high with respect to the friction coefficient, the magnitude of the change in the rotational frequency at the time when the rotational frequency of the front wheel 3 is reduced tends to be large. Meanwhile, in the case where the brake hydraulic pressure of the front wheel 3 is low with respect to the friction coefficient, the magnitude of the change in the rotational frequency at the time when the rotational frequency of the front wheel 3 is reduced tends to be small. Accordingly, it can be indicated that, as the magnitude of the change in the rotational frequency of the front wheel 3 is increased at the time when the rotational frequency is reduced, there is a higher possibility that the rotational frequency of the front wheel 3 is recovered slowly due to the insufficient pressure reduction amount in the pressure reduction control. Thus, in the case where the third condition is satisfied, it is determined to execute the mode of shifting from the hydraulic pressure keeping control to the pressure reduction control. As a result, it is possible to appropriately prohibit the pressure increase control when the rotational frequency of the front wheel 3 is recovered slowly due to the insufficient pressure reduction amount in the pressure reduction control.

As the above magnitude of the change, for example, a value that is acquired by dividing the difference in the rotational frequency of the front wheel 3 at two mutually different time during the reduction of the rotational frequency by the time interval therebetween may be used. Alternatively, for example, as the above magnitude of the change, an average value or a maximum value of the time rate of the change in the rotational frequency of the front wheel 3 at each time during the reduction of the wheel rotational frequency may be used.

The determination section 62a may use all of the first condition, the second condition, and the third condition as the determination criteria for whether to execute the mode of shifting from the hydraulic pressure keeping control to the pressure reduction control, or may use at least one thereof. For example, in the case where all of the first condition, the second condition, and the third condition are satisfied, the determination section 62a may determine to execute the mode of shifting from the hydraulic pressure keeping control to the pressure reduction control. Alternatively, for example, in the case where at least two of the first condition, the second condition, and the third condition are satisfied, the determination section 62a may determine to execute the mode of shifting from the hydraulic pressure keeping control to the pressure reduction control. Further alternatively, for example, in the case where at least one of the first condition, the second condition, and the third condition is satisfied, the determination section 62a may determine to execute the mode of shifting from the hydraulic pressure keeping control to the pressure reduction control.

The reference value in each of the first condition, the second condition, and the third condition described above is appropriately set to a value with which it is possible to appropriately determine whether the rotational frequency of the front wheel 3 is recovered slowly due to the insufficient pressure reduction amount in the pressure reduction control.

Here, from a perspective of appropriately determining to execute the mode of shifting from the hydraulic pressure keeping control to the pressure reduction control at the time when the pressure reduction amount in the pressure reduction control is insufficient, the control section 62 preferably changes the reference values in the above various conditions on the basis of the period in which the outlet valve 32 is opened (that is, the outlet valve open period) in the pressure reduction control in step S513.

In addition, from the similar perspective to the above, the control section 62 preferably changes the reference values in the above various conditions on the basis of information on a road surface condition of a travel road of the motorcycle 100. For example, as the information on the road surface condition, information on a magnitude of the friction coefficient of the travel road (for example, information on whether the travel road is a low µ road or a high µ road) can be used. The low µ road means a road surface that has the relatively low friction coefficient (for example, a frozen road surface or the like), and the high µ road means a road surface that has the relatively higher friction coefficient than the low µ road (for example, a dry asphalt road surface or the like).

If it is determined NO in step S521, in step S523, the determination section 62a determines whether the execution condition of the pressure increase control is satisfied. If it is determined that the execution condition of the pressure increase control is satisfied (step S523/YES), the processing proceeds to step S525. On the other hand, if it is determined that the execution condition of the pressure increase control is not satisfied (step S523/NO), the determination processing in step S523 is repeated.

If it is determined YES in step S523, in step S525, the brake control section 62b executes the pressure increase control, and the control flow illustrated in Fig. 4 is terminated.

More specifically, in the pressure increase control, the brake control section 62b shifts the state where both of the inlet valve 31 and the outlet valve 32 are closed to a state where the inlet valve 31 is opened and the outlet valve 32 is closed, and thereby increases the brake hydraulic pressure in the wheel cylinder 24 so as to increase the braking force to be generated on the front wheel 3.

If it is determined YES in step S521, in step S527, the brake control section 62b executes the additional pressure reduction control. The additional pressure reduction control is control for further reducing the brake hydraulic pressure of the front wheel 3 during the execution of the hydraulic pressure keeping control.

More specifically, in the additional pressure reduction control, the brake control section 62b shifts the state where both of the inlet valve 31 and the outlet valve 32 are closed to the state where the inlet valve 31 is closed and the outlet valve 32 is opened, and thereby reduces the brake hydraulic pressure in the wheel cylinder 24 so as to reduce the braking force to be generated on the front wheel 3. At the time, similar to the pressure reduction control in step S513, the brake fluid, the amount of which corresponds to the reduced amount of the brake hydraulic pressure in the wheel cylinder 24, flows into the accumulator 33. The brake fluid that has flowed into the accumulator 33 is returned to the portion on the master cylinder 21 side of the primary channel 25 via the secondary channel 26 when the pump 34 is driven.

Here, a period in which the outlet valve 32 is opened in the additional pressure reduction control is appropriately set such that, while the insufficient pressure reduction amount in the pressure reduction control in step S513 is appropriately complemented by the additional pressure reduction control, the braking force to be generated on the front wheel 3 does not become excessively small.

Next, in step S529, the determination section 62a determines whether a permission condition of the pressure increase control is satisfied. If it is determined that the permission condition of the pressure increase control is satisfied (step S529/YES), the processing proceeds to step S525, and the pressure increase control is executed as described above. On the other hand, if it is determined that the permission condition of the pressure increase control is not satisfied (step S529/NO), the determination processing in step S529 is repeated.

For example, the permission condition of the pressure increase control is a condition that the state where the rotational frequency of the front wheel 3 is increased has been shifted to the state where the rotational frequency thereof is reduced.

Just as described, in the control flow illustrated in Fig. 4, if it is determined YES in step S521, the pressure increase control is prohibited until the permission condition of the pressure increase control is satisfied regardless of whether the execution condition of the pressure increase control is satisfied. Here, as described above, in step S521, the control section 62 determines whether to execute the mode of shifting from the hydraulic pressure keeping control to the pressure reduction control on the basis of the rotational frequency of the front wheel 3. Accordingly, in the case where the rotational frequency of the front wheel 3 is recovered slowly due to the insufficient pressure reduction amount in the pressure reduction control, it is possible to suppress the pressure increase control from being executed before the rotational frequency of the front wheel 3 is sufficiently recovered. Therefore, the behavior of the motorcycle 100 can appropriately be stabilized.

Here, with reference to Fig. 5 and Fig. 6, a description will be made on an example of the transition of each of the state amounts during the travel of the motorcycle 100 in the case where the control section 62 executes the control flow illustrated in Fig. 4.

Fig. 5 is a graph illustrating the example of the transition of each of the state amounts during the travel on the high µ road. Fig. 6 is a graph illustrating an example of the transition of each of the state amounts during the travel on the low µ road. Fig. 5 and Fig. 6 illustrate transitions of an actual vehicle speed V_{B}, an estimated vehicle speed V_{B_est}, a rotational frequency V_{W} of the front wheel 3, the brake hydraulic pressure P_{W} of the front wheel 3, and a control signal S_{V} used to open the outlet valve 32 as the state amounts. Time at which the control signal S_{V} is higher than that at another time means time at which the outlet valve 32 is opened. In Fig. 5 and Fig. 6, a vertical axis is an axis indicative of a value of each of the state amounts, and a horizontal axis is a time axis.

As described above, the vehicle speed is estimated by using the detection value of the front-wheel rotational frequency sensor 43. Thus, as illustrated in Fig. 5 and Fig. 6, the estimated vehicle speed V_{B_est} possibly becomes lower than the actual vehicle speed V_{B}. The anti-lock brake control is executed on the basis of the slip rate of the front wheel 3 that is estimated by using such an estimated vehicle speed V_{B_est}. As a result, the pressure reduction amount in the pressure reduction control possibly becomes insufficient, which possibly slows recovery of the rotational frequency V_{W}.

The example during the travel on the high µ road illustrated in Fig. 5 corresponds to an example in which it is not determined to execute the mode of shifting from the hydraulic pressure keeping control to the pressure reduction control when such a determination is made. This case corresponds to a case where the sufficient pressure reduction amount in the pressure reduction control is secured. Meanwhile, the example during the travel on the low µ road illustrated in Fig. 6 corresponds to an example in which it is determined to execute the mode of shifting from the hydraulic pressure keeping control to the pressure reduction control when such a determination is made. This case corresponds to a case where the pressure reduction amount in the pressure reduction control is insufficient, and thus the rotational frequency V_{W} is recovered slowly. Compared to the travel on the high µ road, during the travel on the low µ road, it is necessary to further reduce the brake hydraulic pressure P_{W} in order to suppress locking of the front wheel 3, and the brake hydraulic pressure P_{W} after being reduced by the pressure reduction control has a small appropriate range. Accordingly, during the travel on the low µ road, the pressure reduction amount in the pressure reduction control tends to be particularly insufficient. Thus, the rotational frequency of the front wheel 3 is particularly slowly recovered.

In the examples illustrated in Fig. 5 and Fig. 6, which will be described below, in the case where all of the first condition, the second condition, and the third condition, which have been described above, are satisfied, the determination section 62a determines to execute the mode of shifting from the hydraulic pressure keeping control to the pressure reduction control. As described above, the first condition is the condition that the magnitude of the change in the rotational frequency V_{W} at the time when the rotational frequency V_{W} is increased during the execution of the control flow illustrated in Fig. 4 is equal to or smaller than the reference value or is smaller than the reference value. The second condition is the condition that, after the rotational frequency V_{W} is reduced during the execution of the control flow illustrated in Fig. 4, the rotational frequency V_{W} is equal to or lower than the reference value that corresponds to the rotational frequency at the time point of initiating the pressure reduction control (corresponding to each of rotational frequencies V₁, V₂ in Figs. 5 and 6), or is lower than the reference value. The third condition is the condition that the magnitude of the change in the rotational frequency V_{W} at the time when the rotational frequency V_{W} is reduced during the execution of the control flow illustrated in Fig. 4 is equal to or larger than the reference value or is larger than the reference value.

First, a description will be made on the example of the transition of each of the state amounts during the travel on the high µ road with reference to Fig. 5. Fig. 5 and Fig. 6, which will be described later, illustrate the transition of each of the state amounts under a situation where the rider performs the brake operation.

In the example illustrated in Fig. 5, at time t11, it is determined that the front wheel 3 is locked or possibly locked, and the pressure reduction control is initiated. Consequently, at the time t11, the outlet valve 32 is opened, and the brake hydraulic pressure P_{W} starts being reduced. Thereafter, at time t12 at which the outlet valve open period ΔT₁ has elapsed since the time t11, the outlet valve 32 is closed, and the reduction in the brake hydraulic pressure P_{W} is stopped. That is, at the time t12, the hydraulic pressure keeping control is initiated. The pressure reduction amount in the example illustrated in Fig. 5 corresponds to the difference ΔP₁ between the brake hydraulic pressure P_{W} at the time t11 as the time point of initiating the pressure reduction control and the brake hydraulic pressure P_{W} at the time t12 as a time point of terminating the pressure reduction control.

At the time t12 onward, the brake hydraulic pressure P_{W} is kept at a value thereof at the time t12. Then, at time t13, the state where the rotational frequency V_{W} is reduced is shifted to the state where the rotational frequency V_{W} is increased. Thereafter, at time t14 at which the reference period T_{base} has elapsed since the time t12 as the time point of terminating the pressure reduction control (that is, a time point of initiating the hydraulic pressure keeping control), the determination section 62a determines whether to execute the mode of shifting from the hydraulic pressure keeping control to the pressure reduction control.

In the example illustrated in Fig. 5, of the first condition, the second condition, and the third condition that are used as the determination criteria for whether to execute the mode of shifting from the hydraulic pressure keeping control to the pressure reduction control, the first condition and the third condition are not satisfied, and only the second condition is satisfied. Thus, at the time t14, the determination section 62a does not determine to execute the mode of shifting from the hydraulic pressure keeping control to the pressure reduction control.

More specifically, in regard to the first condition, in the example illustrated in Fig. 5, the magnitude of the change in the rotational frequency V_{W} in a period P12 in which the rotational frequency V_{W} is increased as indicated by an arrow A12 (that is, a period from the time t13 to the time t14) is larger than the reference value. Thus, the first condition is not satisfied.

In regard to the third condition, in the example illustrated in Fig. 5, the magnitude of the change in the rotational frequency V_{W} in a period P11 in which the rotational frequency V_{W} is reduced as indicated by an arrow A11 (that is, a period from the time t11 to the time t13) is smaller than the reference value. Thus, the third condition is not satisfied.

In regard to the second condition, in the example illustrated in Fig. 5, in the period P12 after the rotational frequency V_{W} is reduced, the rotational frequency V_{W} is lower than a reference value V_{base_1} that corresponds to the rotational frequency V₁ at the time t11 as the time point of initiating the pressure reduction control. Thus, the second condition is satisfied. In the example illustrated in Fig. 5, the reference value V_{base_1} is set as a larger value than the rotational frequency V₁ at the time point of initiating the pressure reduction control.

Thereafter, at time t15, the execution condition of the pressure increase control that the difference between the rotational frequency V_{W} and the estimated vehicle speed V_{B_est} is smaller than the reference difference is satisfied, and the pressure increase control is executed. As a result, the inlet valve 31 is opened, and, at the time t15 onward, the brake hydraulic pressure P_{W} is increased.

In the example illustrated in Fig. 5, as described above, it is not determined to execute the mode of shifting from the hydraulic pressure keeping control to the pressure reduction control when such a determination is made. This case corresponds to the case where the sufficient pressure reduction amount in the pressure reduction control is secured. Thus, at the time t15 at which the pressure increase control is initiated, the rotational frequency V_{W} is recovered close to the actual vehicle speed V_{B}.

Next, a description will be made on the example of the transition of each of the state amounts during the travel on the low µ road with reference to Fig. 6. Differing from this embodiment, Fig. 6 illustrates the transition of each of the state amounts by a broken line in the case where it is not determined whether to execute the mode of shifting from the hydraulic pressure keeping control to the pressure reduction control and the pressure increase control is executed according to whether the execution condition of the pressure increase control is satisfied. A description on this case will be made later.

In the example illustrated in Fig. 6, at time t21, it is determined that the front wheel 3 is locked or possibly locked, and the pressure reduction control is initiated. Consequently, at the time t21, the outlet valve 32 is opened, and the brake hydraulic pressure P_{W} starts being reduced. Thereafter, at time t22 at which the outlet valve open period ΔT₂ has elapsed since the time t21, the outlet valve 32 is closed, and the reduction in the brake hydraulic pressure P_{W} is stopped. That is, at the time t22, the hydraulic pressure keeping control is initiated. The pressure reduction amount in the example illustrated in Fig. 6 corresponds to the difference ΔP₂ between the brake hydraulic pressure P_{W} at the time t21 as the time point of initiating the pressure reduction control and the brake hydraulic pressure P_{W} at the time t22 as a time point of terminating the pressure reduction control.

At the time t22 onward, the brake hydraulic pressure P_{W} is kept at a value thereof at the time t22. Then, at time t23, the state where the rotational frequency V_{W} is reduced is shifted to the state where the rotational frequency V_{W} is increased. Thereafter, at time t24 at which the reference period T_{base} has elapsed since the time t22 as the time point of terminating the pressure reduction control (that is, a time point of initiating the hydraulic pressure keeping control), the determination section 62a determines whether to execute the mode of shifting from the hydraulic pressure keeping control to the pressure reduction control.

In the example illustrated in Fig. 6, all of the first condition, the second condition, and the third condition that are used as the determination criteria for whether to execute the mode of shifting from the hydraulic pressure keeping control to the pressure reduction control are satisfied. Thus, at the time t24, the determination section 62a determines to execute the mode of shifting from the hydraulic pressure keeping control to the pressure reduction control.

More specifically, in regard to the first condition, in the example illustrated in Fig. 6, the magnitude of the change in the rotational frequency V_{W} in a period P22 in which the rotational frequency V_{W} is increased as indicated by an arrow A22 (that is, a period from the time t23 to the time t24) is smaller than the reference value. Thus, the first condition is satisfied.

In regard to the third condition, in the example illustrated in Fig. 6, the magnitude of the change in the rotational frequency V_{W} in a period P21 in which the rotational frequency V_{W} is reduced as indicated by an arrow A21 (that is, a period from the time t21 to the time t23) is larger than the reference value. Thus, the third condition is satisfied.

In regard to the second condition, in the example illustrated in Fig. 6, in the period P22 after the rotational frequency V_{W} is reduced, the rotational frequency V_{W} is smaller than a reference value V_{base_2} that corresponds to the rotational frequency V₂ at the time t21 as the time point of initiating the pressure reduction control. Thus, the second condition is satisfied. In the example illustrated in Fig. 6, similar to the example illustrated in Fig. 5, the reference value V_{base_2} is set as a larger value than the rotational frequency V₂ at the time point of initiating the pressure reduction control.

Then, at the time t24, the pressure increase control is prohibited, and then the additional pressure reduction control is initiated. Consequently, at the time t24, the outlet valve 32 is opened, and the brake hydraulic pressure P_{W} starts being reduced. Thereafter, at time t25, the outlet valve 32 is closed, and the reduction in the brake hydraulic pressure P_{W} is stopped. At the time t25 onward, the brake hydraulic pressure P_{W} is kept.

Thereafter, at time t27, such a permission condition of the pressure increase control is satisfied that the state where the rotational frequency V_{W} is increased is shifted to the state where the rotational frequency V_{W} is reduced. Then, the pressure increase control is executed. As a result, the inlet valve 31 is opened, and, at the time t27 onward, the brake hydraulic pressure P_{W} is increased.

Here, a description will be made on a case where, differing from this embodiment, the determination on whether to execute the mode of shifting from the hydraulic pressure keeping control to the pressure reduction control is not made and the pressure increase control is executed according to the execution condition of the pressure increase control is satisfied (corresponding to the transition of each of the state amounts indicated by the broken arrow in Fig. 6).

If it is not determined at the time t24 whether to execute the mode of shifting from the hydraulic pressure keeping control to the pressure reduction control, at time t26, such an execution condition of the pressure increase control is satisfied that the difference between the rotational frequency V_{W} and the estimated vehicle speed V_{B_est} is smaller than the reference difference, and the pressure increase control is executed. As a result, the inlet valve 31 is opened, and, at the time t26 onward, the brake hydraulic pressure P_{W} is increased as indicated by the broken line in Fig. 6. As a result, as indicated by the broken line in Fig. 6, the rotational frequency V_{W} starts being reduced regardless of a fact that the rotational frequency V_{W} is not recovered close to the actual vehicle speed V_{B}. Accordingly, in the related art, the rotational frequency V_{W} is recovered slowly due to the insufficient pressure reduction amount in the pressure reduction control. As a result, the pressure increase control is possibly executed before the rotational frequency V_{W} is sufficiently recovered.

Meanwhile, in this embodiment, for example, in the example illustrated in Fig. 6, at the time t24, it is determined to execute the mode of shifting from the hydraulic pressure keeping control to the pressure reduction control, and the pressure increase control is temporarily prohibited. Thus, it is possible to suppress the pressure increase control from being executed before the rotational frequency V_{W} is sufficiently recovered. As a result, at the time t27, the pressure increase control can be initiated in the state where the rotational frequency V_{W} is recovered close to the actual vehicle speed VB. Therefore, the behavior of the motorcycle 100 can appropriately be stabilized.

In the control flow, which has been described above and is illustrated in Fig. 4, in step S521, it is determined whether to execute the mode of shifting from the hydraulic pressure keeping control to the pressure reduction control. However, in step S521, the control section 62 may determine whether to execute the mode of prohibiting (more specifically, temporarily prohibiting) shifting from the hydraulic pressure keeping control to the pressure increase control. In this case, if it is determined in step S521 to execute the mode of prohibiting shifting from the hydraulic pressure keeping control to the pressure increase control (step S521/YES), the processing in step S527 is skipped, and the processing proceeds to the determination processing in step S529. Here, similar to the case of determining whether to execute the mode of shifting from the hydraulic pressure keeping control to the pressure reduction control, the control section 62 determines whether to execute the mode of prohibiting shifting from the hydraulic pressure keeping control to the pressure increase control on the basis of the rotational frequency of the front wheel 3. For example, as determination criteria for whether to execute the mode of prohibiting shifting from the hydraulic pressure keeping control to the pressure increase control, the first condition, the second condition, and the third condition described above can be used in a similar manner to the above-described example. In the case where it is determined to execute the mode of prohibiting shifting from the hydraulic pressure keeping control to the pressure increase control, the pressure increase control is temporarily prohibited until the permission condition of the pressure increase control is satisfied regardless of whether the execution condition of the pressure increase control is satisfied. Thus, it is possible to suppress the pressure increase control from being executed before the rotational frequency of the front wheel 3 is sufficiently recovered. However, from a perspective of further promptly recovering the rotational frequency of the front wheel 3, in step S521, the control section 62 preferably determines whether to execute the mode of shifting from the hydraulic pressure keeping control to the pressure reduction control.

### <Effects of Controller>

A description will be made on effects of the controller 60 according to the embodiment of the present invention.

The controller 60 includes the control section 62 capable of executing the anti-lock brake control in which the control flow is executed at least once, and, in the control flow, the pressure reduction control, the hydraulic pressure keeping control, and the pressure increase control are sequentially executed in this order. In addition, during the execution of the control flow in the anti-lock brake control, the control section 62 determines whether to execute the mode of shifting from the hydraulic pressure keeping control to the pressure reduction control or the mode of prohibiting shifting from the hydraulic pressure keeping control to the pressure increase control on the basis of the rotational frequency of the target wheel (for example, the front wheel 3). Accordingly, in the case where the rotational frequency of the target wheel is recovered slowly due to the insufficient pressure reduction amount in the pressure reduction control, it is possible to suppress the pressure increase control from being executed before the rotational frequency of the target wheel is sufficiently recovered. Therefore, the behavior of the motorcycle 100 can appropriately be stabilized.

The controller 60 preferably includes the condition (for example, the above-described first condition) that the magnitude of the change in the rotational frequency of the target wheel at the time when the rotational frequency of the target wheel is increased during the execution of the control flow is equal to or smaller than the reference value or is smaller than the reference value as the determination criterion for whether to execute the above mode (that is, the mode of shifting from the hydraulic pressure keeping control to the pressure reduction control or the mode of prohibiting shifting from the hydraulic pressure keeping control to the pressure increase control). As a result, it is possible to appropriately determine whether to execute the above mode on the basis of the tendency of the magnitude of the change in the rotational frequency of the target wheel at the time when the rotational frequency is increased in the case where the pressure reduction amount in the pressure reduction control is insufficient.

The controller 60 preferably includes the condition (for example, the above-described second condition) that the rotational frequency of the target wheel is equal to or lower than the reference value that corresponds to the rotational frequency at the time point of initiating the pressure reduction control, or is lower than the reference value after the rotational frequency of the target wheel is reduced during the execution of the control flow as the determination criterion for whether to execute the above mode (that is, the mode of shifting from the hydraulic pressure keeping control to the pressure reduction control or the mode of prohibiting shifting from the hydraulic pressure keeping control to the pressure increase control). As a result, it is possible to appropriately determine whether to execute the above mode on the basis of the tendency of the upper limit value that can be reached when the rotational frequency of the target wheel is reduced and is thereafter increased in the case where the pressure reduction amount in the pressure reduction control is insufficient.

The controller 60 preferably includes the condition (for example, the above-described third condition) that the magnitude of the change in the rotational frequency of the target wheel at the time when the rotational frequency is reduced during the execution of the control flow is equal to or larger than the reference value or is larger than the reference value as the determination criterion for whether to execute the above mode (that is, the mode of shifting from the hydraulic pressure keeping control to the pressure reduction control or the mode of prohibiting shifting from the hydraulic pressure keeping control to the pressure increase control). As a result, it is possible to appropriately determine whether to execute the above mode on the basis of the relationship between the possibility that the rotational frequency of the target wheel is recovered slowly due to the insufficient pressure reduction amount in the pressure reduction control and the magnitude of the change in the rotational frequency of the target wheel at the time when the rotational frequency is reduced.

In the controller 60, the control section 62 preferably changes the reference value in each of the above conditions on the basis of the period in which the outlet valve 32 is opened in the pressure reduction control (that is, the outlet valve open period). In this way, the appropriate reference value can be set according to the outlet valve open period. Thus, it is possible to appropriately determine to execute the above mode in the case where the pressure reduction amount in the pressure reduction control is insufficient. Therefore, it is possible to further appropriately prohibit the pressure increase control in the case where the pressure reduction amount in the pressure reduction control is insufficient.

In the controller 60, the control section 62 preferably changes the reference value in each of the above conditions on the basis of the information on the road surface condition of the travel road of the motorcycle 100. In this way, the appropriate reference value can be set according to the information on the road surface condition. Thus, it is possible to appropriately determine to execute the above mode in the case where the pressure reduction amount in the pressure reduction control is insufficient. Therefore, it is possible to further appropriately prohibit the pressure increase control in the case where the pressure reduction amount in the pressure reduction control is insufficient.

Preferably, the motorcycle 100 is at least provided with, as the wheel rotational frequency sensor, the wheel rotational frequency sensor for the front wheel 3 (more specifically, the front-wheel rotational frequency sensor 43), and the control section 62 can execute the anti-lock brake control only for the front wheel 3 as the target. As described above, the anti-lock brake control is conventionally executed on the basis of the slip rate that is identified by using the estimated vehicle speed, and the vehicle speed is estimated on the basis of the wheel rotational frequency detected by the wheel rotational frequency sensor. However, in regard to the estimation of the vehicle speed by using the detection value of the wheel rotational frequency sensor, the estimated vehicle speed is possibly estimated to be lower than the actual vehicle speed. In particular, in regard to the estimation of the vehicle speed only by using the detection value of the single wheel rotational frequency sensor, there is a high tendency that the estimated vehicle speed is estimated to be lower than the actual vehicle speed. Thus, due to the insufficient pressure reduction amount in the pressure reduction control, there is a particularly high tendency that the behavior of the motorcycle 100 becomes unstable.

Here, as described above, the controller 60 can appropriately stabilize the behavior of the motorcycle 100 by determining whether to execute the above mode on the basis of the rotational frequency of the target wheel. Therefore, it is possible to further effectively exert an effect of appropriately stabilizing the behavior of the motorcycle 100 by applying the controller 60 to the motorcycle 100 that only includes the wheel rotational frequency sensor for the front wheel 3 and can execute the anti-lock brake control only for the front wheel 3 as the target.

The controller 60 may be mounted to and used for a motorcycle that further includes a wheel rotational frequency sensor for the rear wheel 4 and can execute the anti-lock brake control only for the front wheel 3 as the target. In this case, the vehicle speed can be estimated by using the detection values of the two wheel rotational frequency sensors. However, in regard to the estimation of the vehicle speed by using the detection values of the two wheel rotational frequency sensors, such a tendency that the estimated vehicle speed is estimated to be lower than the actual vehicle speed is lower than the case where the vehicle speed is estimated by using only the detection value of the single wheel rotational frequency sensor. However, in the case where one of the wheels is locked, it is difficult to appropriately estimate the vehicle speed by using the detection values of the two wheel rotational frequency sensors. Thus, it is assumed that only the detection value of the wheel rotational frequency sensor for the unlocked wheel is used to estimate the vehicle speed. Even in such a case, as described above, the controller 60 can appropriately stabilize the behavior of the motorcycle 100 by determining whether to execute the above mode on the basis of the rotational frequency of the target wheel. Therefore, it is possible to further effectively exert the effect of appropriately stabilizing the behavior of the motorcycle 100.

### <Another Example of Motorcycle>

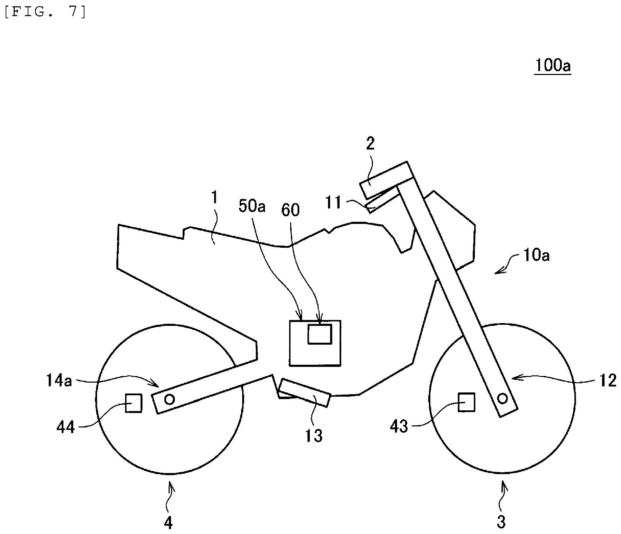

The description has been made above on the case where the controller 60 is mounted to the motorcycle 100 described with reference to Fig. 1 and the like. However, the controller 60 may be mounted to a motorcycle with another configuration. A description will hereinafter be made on another example of the motorcycle to which the controller 60 can be mounted with reference to Fig. 7.

Fig. 7 is a schematic view of an outline configuration of a motorcycle 100a to which the controller 60 is mounted.

The motorcycle 100a differs from the above-described motorcycle 100 in a point of further including a rear-wheel rotational frequency sensor 44.

The rear-wheel rotational frequency sensor 44 is a wheel rotational frequency sensor for the rear wheel 4 that detects a rotational frequency of the rear wheel 4 (for example, the rotational frequency of the rear wheel 4 per unit time [rpm], a travel distance per unit time [km/h], or the like), and outputs a detection result. The rear-wheel rotational frequency sensor 44 may detect another physical quantity that can substantially be converted to the rotational frequency of the rear wheel 4. The rear-wheel rotational frequency sensor 44 is provided to the rear wheel 4.

In addition, a brake system 10a of the motorcycle 100a differs from the brake system 10 of the above-described motorcycle 100 in a point of capable of executing the anti-lock brake control for each of the front wheel 3 and the rear wheel 4 as the target.

More specifically, similar to the front-wheel brake mechanism 12, a rear-wheel brake mechanism 14a in the brake system 10a includes similar components to the primary channel 25, the secondary channel 26, the inlet valve 31, the outlet valve 32, the accumulator 33, and the pump 34 described above, and these components are provided in a hydraulic pressure control unit 50a.

In the motorcycle 100a, the control section 62 of the controller 60 controls operation of each of the above components provided in the hydraulic pressure control unit 50a among the components of the rear-wheel brake mechanism 14a. In this way, the control section 62 can control the braking force to be generated on the rear wheel 4 by the rear-wheel brake mechanism 14a in a similar manner to the braking force to be generated on the front wheel 3 by the front-wheel brake mechanism 12. In addition, as described above, since the motorcycle 100a is provided with the rear-wheel rotational frequency sensor 44, the control section 62 can determine whether the rear wheel 4 is locked or possibly locked by using the detection result of the rear-wheel rotational frequency sensor 44. Thus, the control section 62 can execute the anti-lock brake control not only for the front wheel 3 but also for the rear wheel 4 as the targets.

More specifically, in the case where the front wheel 3 is locked or possibly locked, the brake control section 62b executes the anti-lock brake control for the front wheel 3 as the target. In such control, the braking force to be generated on the front wheel 3 by the front-wheel brake mechanism 12 is adjusted. In addition, in the case where the rear wheel 4 is locked or possibly locked, the brake control section 62b executes the anti-lock brake control for the rear wheel 4 as the target. In such control, the braking force to be generated on the rear wheel 4 by the rear-wheel brake mechanism 14a is adjusted.

In addition, in the case where the anti-lock brake control is executed for the front wheel 3 as the target, during the execution of the control flow in the anti-lock brake control, the determination section 62a determines whether to execute the mode of shifting from the hydraulic pressure keeping control to the pressure reduction control or the mode of prohibiting shifting from the hydraulic pressure keeping control to the pressure increase control on the basis of the rotational frequency of the front wheel 3 as the target wheel of the anti-lock brake control. Furthermore, in the case where the anti-lock brake control is executed for the rear wheel 4 as the target, during the execution of the control flow in the anti-lock brake control, the determination section 62a determines whether to execute the mode of shifting from the hydraulic pressure keeping control to the pressure reduction control or the mode of prohibiting shifting from the hydraulic pressure keeping control to the pressure increase control on the basis of the rotational frequency of the rear wheel 4 as the target wheel of the anti-lock brake control.

As described above, the motorcycle 100a is provided with, as the wheel rotational frequency sensors detecting the wheel rotational frequencies, the wheel rotational frequency sensor for the front wheel 3 (more specifically, the front-wheel rotational frequency sensor 43) and the wheel rotational frequency sensor for the rear wheel 4 (more specifically, the rear-wheel rotational frequency sensor 44), and the control section 62 can execute the anti-lock brake control for each of the front wheel 3 and the rear wheel 4 as the targets. Thus, in the anti-lock brake control for the front wheel 3 as the target, it is determined whether to execute the above mode on the basis of the rotational frequency of the front wheel 3. In the anti-lock brake control for the rear wheel 4 as the target, it is determined whether to execute the above mode on the basis of the rotational frequency of the rear wheel 4. In this way, it is possible to appropriately stabilize behavior of the motorcycle 100a.

In addition, since the motorcycle 100a is provided with the front-wheel rotational frequency sensor 43 and the rear-wheel rotational frequency sensor 44, the vehicle speed can be estimated by using the detection values of the two wheel rotational frequency sensors. Here, in regard to the estimation of the vehicle speed by using the detection values of the two wheel rotational frequency sensors, such a tendency that the estimated vehicle speed is estimated to be lower than the actual vehicle speed is lower than the case where the vehicle speed is estimated only by using the detection value of the single wheel rotational frequency sensor. However, in the case where there is a tendency that both of the front and rear wheels are simultaneously locked, it is difficult to appropriately estimate the vehicle speed by using the detection values of the two wheel rotational frequency sensors. Even in such a case, as described above, the controller 60 can appropriately stabilize the behavior of the motorcycle 100a by determining whether to execute the above mode on the basis of the rotational frequency of the target wheel. Therefore, it is possible to further effectively exert an effect of appropriately stabilizing the behavior of the motorcycle 100a.

The present invention is not limited to each of the embodiments. For example, each of the embodiments may be implemented partially.

### Reference Signs List

- 1:: Trunk
- 2:: Handlebar
- 3:: Front wheel
- 3a:: Rotor
- 4:: Rear wheel
- 10, 10a:: Brake system
- 11:: First brake operation section
- 12:: Front-wheel brake mechanism
- 13:: Second brake operation section
- 14, 14a:: Rear-wheel brake mechanism
- 21:: Master cylinder
- 22:: Reservoir
- 23:: Brake caliper
- 24:: Wheel cylinder
- 25:: Primary channel
- 26:: Secondary channel
- 31:: Inlet valve
- 32:: Outlet valve
- 33:: Accumulator
- 34:: Pump
- 43:: Front-wheel rotational frequency sensor
- 44:: Rear-wheel rotational frequency sensor
- 50, 50a:: Hydraulic pressure control unit
- 51:: Base body
- 60:: Controller
- 61:: Acquisition section
- 62:: Control section
- 62a:: Determination section
- 62b:: Brake control section
- 100,: 100a: Motorcycle

## Claims

1. A controller (60) that controls behavior of a straddle-type vehicle (100), the controller comprising:
a control section (62) capable of executing anti-lock brake control in which a control flow is executed at least once, in the control flow, pressure reduction control for reducing a brake hydraulic pressure of a target wheel (3), hydraulic pressure keeping control for keeping the brake hydraulic pressure, and pressure increase control for increasing the brake hydraulic pressure being sequentially executed in this order, wherein
during execution of the control flow, the control section (62) determines whether to execute a mode of shifting from the hydraulic pressure keeping control to the pressure reduction control or a mode of prohibiting shifting from the hydraulic pressure keeping control to the pressure increase control on the basis of a rotational frequency of the target wheel (3).

2. The controller according to claim 1, wherein
a determination criterion for whether to execute the mode includes a condition that a magnitude of a change in the rotational frequency at the time when the rotational frequency is increased during the execution of the control flow is equal to or smaller than a reference value or is smaller than the reference value.

3. The controller according to claim 1 or 2, wherein
a determination criterion for whether to execute the mode includes a condition that, after the rotational frequency is reduced during the execution of the control flow, the rotational frequency is equal to or lower than a reference value that corresponds to the rotational frequency at a time point of initiating the pressure reduction control, or is lower than the reference value.

4. The controller according to claim 2 or 3, wherein
the determination criterion for whether to execute the mode includes a condition that a magnitude of a change in the rotational frequency at the time when the rotational frequency is reduced during the execution of the control flow is equal to or larger than a reference value or is larger than the reference value.

5. The controller according to any one of claims 2 to 4, wherein
the straddle-type vehicle (100) is provided with an outlet valve (32) that is opened to reduce the brake hydraulic pressure, and
the control section (62) changes the reference value on the basis of a period in which the outlet valve (32) is opened in the pressure reduction control.

6. The controller according to any one of claims 2 to 5, wherein
the control section (62) changes the reference value on the basis of information on a road surface condition of a travel road of the straddle-type vehicle (100).

7. The controller according to any one of claims 1 to 6, wherein
the straddle-type vehicle (100) is at least provided with a wheel rotational frequency sensor (43) for a front wheel (3) as a wheel rotational frequency sensor, and
the control section (62) can execute the anti-lock brake control only for the front wheel (3) as a target.

8. The controller according to any one of claims 1 to 6, wherein
the straddle-type vehicle (100) is provided with, as wheel rotational frequency sensors, a wheel rotational frequency sensor (43) for a front wheel (3) and a wheel rotational frequency sensor (44) for a rear wheel (4), and
the control section (62) can execute the anti-lock brake control for each of the front wheel (3) and the rear wheel (4) as targets.

9. A control method for controlling behavior of a straddle-type vehicle (100), the control method comprising:
determining whether to execute a mode of shifting from hydraulic pressure keeping control to pressure reduction control or a mode of prohibiting shifting from the hydraulic pressure keeping control to pressure increase control on the basis of a rotational frequency of a target wheel (3) during execution of a control flow by a control section (62) of a controller (60) capable of executing anti-lock brake control in which the control flow is executed at least once, in the control flow, the pressure reduction control for reducing a brake hydraulic pressure of the target wheel (3) , the hydraulic pressure keeping control for keeping the brake hydraulic pressure, and the pressure increase control for increasing the brake hydraulic pressure being sequentially executed in this order.
